# EUROPEAN PATENT SPECIFICATION

(11) **EP 1 884 091 B1**
(45) Date of publication and mention of the grant of the patent: **28.01.2015**
(21) Application number: 06733498.7
(22) Date of filing: 17.05.2006
(51) Int. Cl.: H04W 76/02, H04W 88/16, H04L 29/06

(54) **LOCAL SWITCHING OF CALLS SETUP BY MULTIMEDIA CORE NETWORK**
LOKALE UMSCHALTUNG EINER RUFEINRICHTUNG DURCH EIN MULTIMEDIA-KERNNETZ
COMMUTATION LOCALE DE CONFIGURATION D'APPELS PAR RESEAU CENTRAL MULTIMEDIA

(30) Priority: 25.05.2005 US 684215 P; 22.12.2005 US 314973
(43) Date of publication of application: 06.02.2008
(73) Proprietor: Telefonaktiebolaget L- M Ericsson (publ), 164 83 Stockholm (SE)
(72) Inventor: LARSSON, Anders, S-116 21 Stockholm (SE); BÄCKSTRÖM, Martin, S-185 38 Danderyd (SE)
(74) Representative: Kühn, Friedrich Heinrich
(86) International application number: PCT/SE2006/050128
(87) International publication number: WO 2006/126959

(56) References cited:
- WO-A1-2005/027460
- WO-A1-2005/039132
- US-A1- 2002 120 749
- US-A1- 2003 026 245
- US-A1- 2004 190 689

## Description

### BACKGROUND

### TECHNICAL FIELD

The present invention pertains to telecommunications, and particularly to Voice over Internet Protocol (VoIP).

### RELATED ART AND OTHER CONSIDERATIONS

In a typical cellular radio system, including cellular technologies which utilize GPRS (General Packet Radio Service), EDGE (Enhanced Data Rates for Global Evolution), and WCDMA (Wideband Code Division Multiple Access), wireless user equipment units (UEs) communicate via a radio access network (RAN) to one or more core networks. The user equipment units (UEs) can be mobile stations or mobile terminals such as mobile telephones ("cellular" telephones) and laptops with mobile termination, and thus can be, for example, portable, pocket, hand-held, computer-included, or car-mounted mobile devices which communicate voice and/or data with radio access network. Alternatively, the wireless user equipment units can be fixed wireless devices, e.g., fixed cellular devices/terminals which are part of a wireless local loop or the like.

The radio access network (RAN) covers a geographical area which is divided into cell areas, with each cell area being served by a base station. A cell is a geographical area where radio coverage is provided by the radio base station or base station transceiver equipment at a base station site. Each cell is identified by a unique identity, which is broadcast in the cell. The base stations communicate over the air interface (e.g., radio frequencies) with the user equipment units (UE) within range of the base stations. In the radio access network, several base stations are typically connected (e.g.. by landlines or microwave) to a radio access control node, such as a base station controller (BSC) node or radio network controller (RNC) node. The radio access control node supervises and coordinates various activities of the plural base stations connected thereto. The radio access control nodes are typically connected to one or more core networks, e.g.. to core network nodes such as mobile switching center (MSC) node.

In some instances and in some telecommunications networks, a call from a mobile station to another relatively nearby mobile station might be switched not only through local switching sites or nodes, but also through central or remote switching sites which may trigger a greater tariff or financial charge. In some older, circuit switched (CS) domain networks (prior to the advent of voice over Internet Protocol (VoIP)), a mechanism in the form of a Media Gateway (MGw) was situated at a local site and served to switch the call locally. The MGw (Media Gateway) avoided central switching of local calls, thereby saving money for the operator and reducing load on the central switching site(s).

In circuit-switched networks, network resources are static from the sender to receiver before the start of the transfer, thus creating a "circuit". The resources remain dedicated to the circuit during the entire transfer and the entire message follows the same path. In packet-switched networks, the message is broken into packets, each of which can take a different route to the destination where the packets are recompiled into the original message.

Voice over Internet Protocol (VoIP) in the mobile world means using a packet switched (PS) service for transport of Internet Protocol (IP) packets (which contain, e.g.. Adaptive Multi-Rate codec (AMR) speech frames) for normal mobile phone calls. The packet switched (PS) service utilized for VoIP can be, for example, GPRS (General Packet Radio Service), EDGE (Enhanced Data Rates for Global Evolution), or WCDMA (Wideband Code Division Multiple Access). Each of these example services happen to be built upon the Global System for Mobile communications (GSM), a second generation ("2G") digital radio access technology originally developed for Europe. GSM was enhanced in 2.5G to include technologies such as GPRS. The third generation (3G) comprises mobile telephone technologies covered by the International Telecommunications Union (ITU) IMT-2000 family. The Third Generation Partnership Project (3GPP) is a group of international standards bodies, operators, and vendors working toward standardizing WCDMA-based members of the IMT-2000.

The Internet Protocol (IP) Multimedia Subsystem (ISM) standard defines a generic architecture for offering voice over IP (VoIP) and multimedia services. It is an internationally recognize standard, first specified by the Third Generation Partnership Project (3GPP/3GPP2) and now being embraced by other standards bodies including ETSI/TISPAN. The IMS standard supports multiple access types, including GSM, WCDMA. CDMA2000. Wireline broadband access, and WLAN. Internet Protocol (IP) Multimedia Subsystem (ISM) standard encompasses but is not limited to the following (all of which are incorporated by reference herein):

3GPP TS 23.228 V7.1.0 (2005-09). 3rd Generation Partnership Project; Technical Specification Group Services and System Aspects: IP Multimedia Subsystem (IMS): Stage 2 (Release 7).

3GPP TS 24.228 V5.13.0 (2005-06). 3rd Generation Partnership Project; Technical Specification Group Core Network and Terminals: Signalling flows for the IP multimedia call control based on Session Initiation Protocol (SIP) and Session Description Protocol (SDP); Stage 3 (Release 5).

3GPP TS 24.229 V7.1.1 (2005-10). 3rd Generation Partnership Project: Technical Specification Group Core Network and Terminals: IP Multimedia Call Control based on Session Initiation Protocol (SIP) and Session Description Protocol (SDP): Stage 3 (Release 7).

3GPPTR 22.941 V0.7.7 (2001-11). 3rd Generation Partnership Project: Technical Specification Group Services and System Aspects: IP Based Multimedia Services Framework; Stage 0 (Release 5).

3GPP TS 32.225 V5.9.0 (2005-09). 3rd Generation Partnership Project; Technical Specification Group Service and System Aspects: Telecommunication Management: Charging Management: Charging Data Description for IP Multimedia Subsystem (IMS) (Release 5).

3GPP TS 22.340 V6.2.0 (2005-03). 3rd Generation Partnership Project; Technical Specification Group Service and System Aspects: IP Multimedia System (IMS) Messaging; Stage 1 (Release 6).

3GPP TS 29.228 V6.8.0. (2005-09). 3rd Generation Partnership Project: Technical Specification Group Core Network and Terminals; IP Multimedia (1M) Subsystem Cx and Dx interfaces: Signalling flows and message contents (Release 6).

3GPP TS 22.250 V6.0.0 (2002-12), 3rd Generation Partnership Project: Technical Specification Group Services and System Aspects; IP Multimedia Subsystem (IMS) group management: Stage 1 (Release 6).

3GPP TS 26.141 V6.1.0 (2005-03). 3rd Generation Partnership Project; Technical Specification Group Services and System Aspects: IP Multimedia System (IMS) Messaging and Presence: Media formats and codecs (Release 6).

For users. IMS-based services enable person-to-person and person-to-content communications in a variety of modes, including voice, text, pictures, and video, or any combination thereof, in a highly personalized and controlled way. For operators. IMS expands the concept of layered architecture by defining a horizontal architecture, where service enablers and common functions can be reused for multiple applications. The horizontal architecture in IMS also specifies interoperability and roaming, and provides bearer control, charging, and security. IMS is well integrated with existing voice and data networks, while adopting many of the key benefits of the IT domain.

IMS architecture involves three layers: an application or service layer: a control layer; and, a connectivity layer. The application or service layer comprises application and content servers for executing value-added services for the user. Generic service enablers as defined in the IMS standard (such as presence and group list management, for example) are implemented as services in a SIP application server. In IMS. many functions can be reused for fast service creation and delivery. A single application server may host multiple services (for example, telephony and messaging). Co-locating of multiple services has significant advantages, especially with regard to the loading of the IMS core network nodes.

The IMS control layer comprises network servers for managing call or session set-up, modification, and release. Among the network servers is a Call Session Control Function (CSCF), also known as the SIP server. The control layer also typically includes a full suite of support functions, such as provisioning, charging, and operation and management (O&M). Interworking with other operators' networks and/or other types of networks is handled by border gateways.

The connectivity layer comprises routers and switches, both for the backbone and the access network.

When IMS (IP Multimedia Subsystem) is available, IMS can be one of the core networks to which the radio access network connects. In fact, the IP Multimedia Subsystem (IMS) can replace a conventional circuit switched core network (e.g., the MSC type nodes of a core network). Such replacement of a conventional circuit switched core network with an IP Multimedia Subsystem (IMS) can be implemented rather rapidly. Yet despite the potential for rapid network replacement, in terms of user terminals the replacement of regular circuit switched phones with VoIP-capable phones will likely occur slowly as historically users tend to cling to old phones for many years. Accordingly, even after network replacement with IP Multimedia Subsystem (IMS), at least for some time provision must be made to accommodate the lingering use of legacy circuit switched phones.

Traditionally, all calls which involve the IP Multimedia Subsystem (IMS) or an IMS-related service, are both setup and routed through the IMS. For example, call setup signaling for a calling mobile station (UE) is routed to the IP Multimedia Subsystem (IMS); further call setup signaling is sent from the IMS to a called mobile station; and yet further signaling, e.g., confirming call setup, is routed through the IMS back to the calling mobile station. Thereafter, user traffic involved in the call is routed from one of the mobiles stations involved in the call through the radio access network to the IP Multimedia Subsystem (IMS), with switching of the user traffic occurring in the IP Multimedia Subsystem (IMS) and routing of the IMS-switched user traffic from the IP Multimedia Subsystem (IMS) back through the radio access network to the other mobile station involved in the call. Imposing both signaling and user traffic switching upon the IP Multimedia Subsystem (IMS) exacts considerable resources of the IP Multimedia Subsystem (IMS) and places a high load on the IP Multimedia Subsystem (IMS). <page 5a>

In reality, many calls between mobile stations (UEs) are geographically local within the same BSC area. People predominately call other people in the same city or

Document WO2005/039132 discloses a system, apparatus and method for establishing circuit-switched (CS) communications in packet-switched (PS) multimedia networks (210) such as IMS, and providing services via the PS networks (210) to CS domain (224) users. Document US 2002/0120749 discloses using session signaling, a multimedia session with plural media data streams is initiated between the mobile terminal and a remote host coupled to a packet data network.
nearby region. Therefore, having user traffic for all mobile calls switched through the IP Multimedia Subsystem (IMS) in accordance with the conventional practice places a high load on the IP Multimedia Subsystem (IMS) as well as possibly greater costs for transmission.

What is need therefore, and an object of the present invention, is method, apparatus, and techniques for facilitating a voice over Internet Protocol (VoIP) call in a manner conducive to economic utilization of the IP Multimedia Subsystem (IMS).

### SUMMARY

A gateway of a telecommunications network is arranged for performing protocol signaling conversion for communicating call setup signaling to an IP Multimedia Subsystem (IMS), and upon completion of call setup is arranged to route user traffic between local mobile stations involved in a connection without routing the user traffic to the IP Multimedia Subsystem (IMS) or without routing the user traffic through a Media Gateway (MGw).

In an example embodiment the gateway is arranged for: (1) performing conversion of call setup signaling between (a) a signaling protocol suitable for use in conjunction with a radio access network for setting up a circuit switch connection and (b) a signaling protocol for a IP Multimedia Subsystem (IMS); (2) routing the call setup signaling between the IP Multimedia Subsystem (IMS) and a node of the radio access network (RAN), and, after completion of call setup for a connection; (3) switching user traffic of the connection locally without routing the user traffic of the connection to the IP Multimedia Subsystem (IMS).

In an example implementation, the signaling protocol is suitable for use over an interface between a circuit switch domain core network node and a radio access network includes GSM 24.008 signaling and the signaling protocol for a IP Multimedia Subsystem (IMS) is Session Initiation Protocol (SIP) signaling.

The gateway can be situated in any of several locations such as, for example, at a mobile switching center (MSC) node, at a base station controller node of the radio access network (RAN), or at a node distinct from a mobile switching center node (MSC) and a base station controller (BSC) node, e.g., at a dedicated gateway node.

The gateway can be part of a telecommunications system which comprises an IP Multimedia Subsystem (IMS) for performing call setup for a Voice over Internet Protocol (VoIP) connection between two mobile stations.

According to an aspect of the technology, a method of operating a telecommunications system comprises: (1) performing conversion of call setup signaling between (a) a signaling protocol suitable for use in conjunction with a radio access network for setting up a circuit switch connection and (b) a signaling protocol for a IP Multimedia Subsystem (IMS); (2) routing the call setup signaling between the IP Multimedia Subsystem (IMS) and a node of the radio access network (RAN), and, after completion of call setup for a connection; (3) switching user traffic of the connection locally without routing the user traffic of the connection to the IP Multimedia Subsystem (IMS).

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 is a schematic view of a telecommunications system in accordance with a first example embodiment of the present technology.
Fig. 1A is a schematic view showing signaling for call setup for a connection in the embodiment of Fig. 1; Fig. 1B is a schematic view showing user traffic routing for a connection in the embodiment of Fig. 1.
Fig. 2 is a schematic view of a telecommunications system in accordance with a second example embodiment of the present technology.
Fig. 2A is a schematic view showing signaling for call setup for a connection in the embodiment of Fig. 2; Fig. 2B is a schematic view showing user traffic routing for a connection in the embodiment of Fig. 2.
Fig. 3 is a schematic view of a telecommunications system in accordance with a third example embodiment of the present technology.
Fig. 3A is a schematic view showing signaling for call setup for a connection in the embodiment of Fig. 3: Fig. 3B is a schematic view showing user traffic routing for a connection in the embodiment of Fig. 3.
Fig. 4 is a diagrammatic view showing signaling messages involved in call setup, including signaling messages converted by a gateway.

### DETAILED DESCRIPTION OF THE DRAWINGS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry embodying the principles of the technology. Similarly, it will be appreciated that any flow charts, state transition diagrams, pseudo code, and the like represent various processes which may be substantially represented in computer readable medium and so executed by a computer or processor, whether or not such computer or processor is explicitly shown.

The functions of the various elements including functional blocks labeled as "processors" or "controllers" may be provided through the use of dedicated hardware as well as hardware capable of executing software in association with appropriate software. When provided by a processor, the functions may be provided by a single dedicated processor, by a single shared processor, or by a plurality of individual processors, some of which may be shared or distributed. Moreover, explicit use of the term "processor" or "controller" should not be construed to refer exclusively to hardware capable of executing software, and may include, without limitation, digital signal processor (DSP) hardware, read only memory (ROM) for storing software, random access memory (RAM), and non-volatile storage.

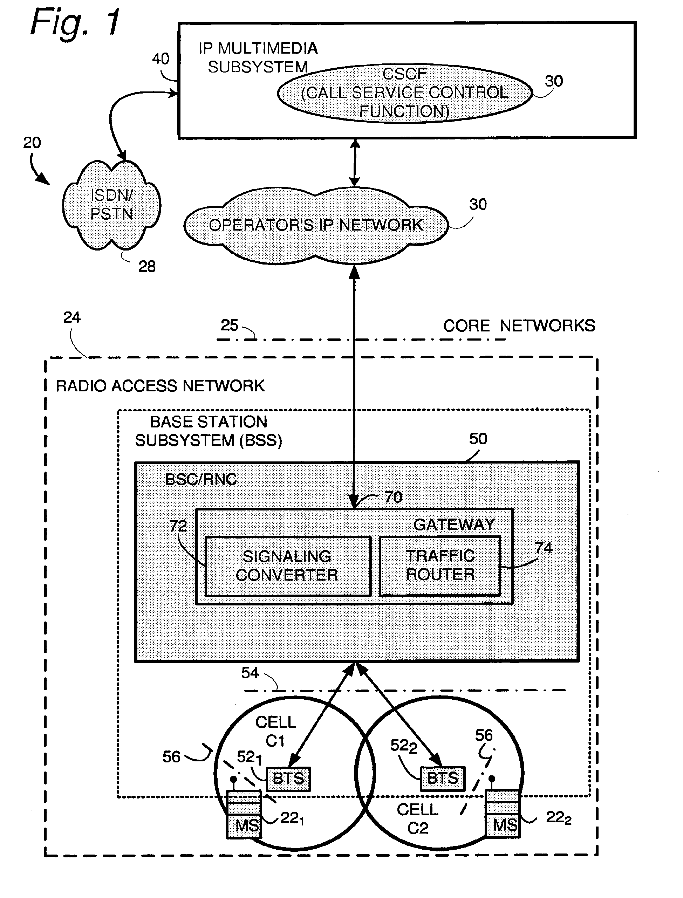

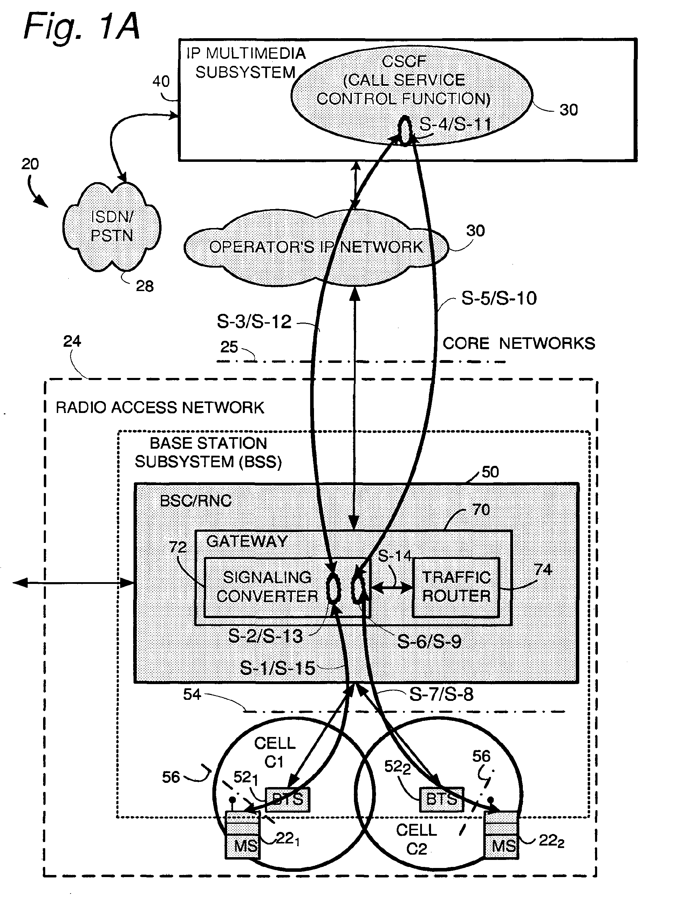

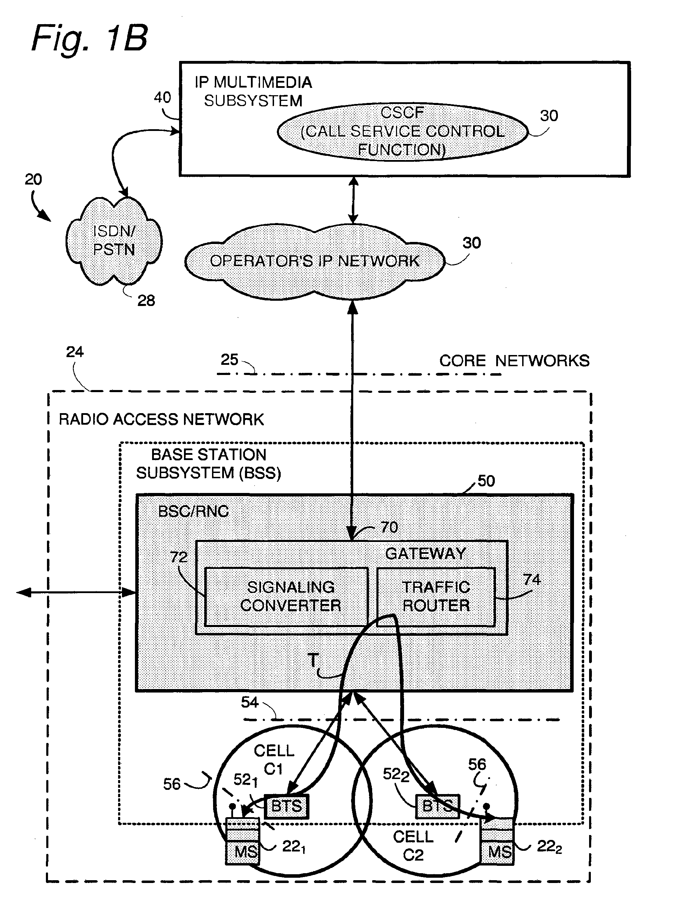

Fig. 1 illustrates a telecommunications system 20 wherein a mobile stations (MS) 22 are served by a radio access network 24. As used herein, the term "mobile station (MS)" generically refers to any appropriate wireless equipment, including but not limited to equipment also and elsewhere referred to as a mobile terminal (MT) or a user equipment unit (UE).

In the example embodiment of Fig. 1, radio access network 24 is connected to an operator's internet protocol (IP) network 30. Through operator's IP network 30 the radio access network 24 has access to IP Multimedia Subsystem (IMS) 40. In the example of Fig. 1. as well as other figures, interfaces are represented by dot-dashed lines.

The IP Multimedia Subsystem (IMS) 40 includes a call service control function (CSCF) 42. The call service control function (CSCF) 42, also known as the SIP server, manages call or session set-up, modification, and release. Although not illustrated as such, it will be appreciated that IP Multimedia Subsystem (IMS) 40 typically includes other units or functionalities in its various layers as previously discussed.

In the non-limiting, illustrated example embodiment of Fig. 1, radio access network 24 is illustrated generically to represent any one of several potential radio access technologies. The radio access network 24 typically comprises a base station subsystem (BSS), which generally includes one or more base station controllers (BSC) 50. Since a base station controller 50 is typically situated at a node which is primarily if not exclusively dedicated to the base station controller, often reference is made to a base station controller (BSC) node. Although a base station subsystem (BSS) typically comprises plural base station controllers, for sake of simplicity only one base station controller (BSC) 50 is shown in Fig. 1. The base station controller (BSC) 50 controls and therefore is connected over an interface 54 to one or more base station transceivers, also known simply referred to as base stations (BS), such as base station (BS) 52, and base station (BS) 52₂ shown in Fig. 1. The base stations communicate over an air interface, generically shown as interface 56, with mobile stations.

Since radio access network 24 is generically depicted, it should be understood that the terminology of the base station subsystem can vary depending on the type of radio access technology involved. For example, in the example case that radio access network 24 is a GSM/EDGE radio access network (GERAN), the base station controller (BSC) 50 is connected across interface 25 (also known as the A interface) to one or more core networks. Moreover, in a GSM/EDGE radio access network (GERAN), the interface 54 is known as the Abis interface over which the base station controller (BSC) is connected to one or more base stations, more commonly referred to as base station transceivers (BTS). The base station transceivers (BTS) communicate over air interface 56, also known as the Um interface, with the mobile stations (MS).

In another example case, the radio access network 24 can be a wideband CDMA radio access network known as UTRAN (Universal Mobile Telecommunications (UMTS) Terrestrial Radio Access Network). In UTRAN. the base station controller is referred to as an radio network controller (RNC) which communicates over interface 25 (also known as the Iu interface) with one or more core networks. The UMTS is a third generation system which in some respects builds upon the radio access technology known as Global System for Mobile communications (GSM) developed in Europe. UTRAN is essentially a radio access network providing wideband code division multiple access (WCDMA) to user equipment units (UEs). The Third Generation Partnership Project (3GPP) has undertaken to evolve further the UTRAN and GSM-based radio access network technologies. In UTRAN. an RNC communicates over interface 54 (known as the Iub interface) with one or more base station nodes. The base stations also referred to as B nodes, or "Node-B". In UTRAN. the mobile stations, usually termed user equipment units or UEs, communicate over the air interface 56, known as the Uu interface, with the base station nodes.

Returning now to a generic discussion of the example radio access network 24 shown in Fig. 1, base station controller (BSC) 50 is connected to two base stations, particularly base station (BS) 52₁ and base station (BS) 52₂. It will be appreciated by those skilled in the art that a base station may serve for communicating across the air interface 56 for more than one cell, and that differing base stations may serve differing numbers of cells. It will further be appreciated that base station controller (BSC) 50 may control more than two base stations. Each base station (BS) 52 in Fig. 1 is shown as being at the center of a respective cell. For example, base station (BS) 52₁ is shown as serving cell C1 and base station (BS) 52₂ as serving cell C2. Depending on the number of radio frequencies at which it operates, one and the same base station may serve more cell, and (contrary to what is illustrated in Fig. 1) multiple cells may be essentially co-located if desired.

Although not illustrated as such nor described herein, the radio access network 24 of Fig. 1 can be connected through appropriate interfaces to other radio access networks, e.g., packet switched core networks, for example.

The telecommunications system 20 of Fig. 1 features signal conversion and traffic routing gateway, herein also called gateway unit or gateway 70. In the example embodiment of Fig. 1, gateway 70 is located at base station controller (BSC) 50. The gateway 70 is arranged for performing protocol signaling conversion for communicating call setup signaling to IP Multimedia Subsystem (IMS) 40. and upon completion of call setup is arranged to route user traffic between local mobile stations 22 involved in a connection without routing the user traffic to IP Multimedia Subsystem (IMS) 40. More specifically, gateway 70 is arranged for: (1) performing conversion of call setup signaling between (a) a signaling protocol suitable for use in conjunction with a radio access network for setting up a circuit switch connection and (b) a signaling protocol for a IP Multimedia Subsystem (IMS): (2) routing the call setup signaling between the IP Multimedia Subsystem (IMS) and a node of the radio access network (RAN), and, after completion of call setup for a connection: (3) switching user traffic of the connection locally without routing the user traffic of the connection to the IP Multimedia Subsystem (IMS). In view of its functionality, in an example non-limiting implementation gateway 70 can be viewed as comprising both signaling converter 72 and traffic router 74. e.g.. a multi-port traffic switch.

The gateway 70 can include an SIP client. In an example implementation, in terms of object-oriented program an "instance" of the SIP client is created for each connection handled by the gateway 70, i.e., for each connection which is set up through IP Multimedia Subsystem (IMS) 40 but for which user traffic is switched by gateway 70 without traffic routing through IP Multimedia Subsystem (IMS) 40.

As previously explained, in the example embodiment of Fig. 1, gateway 70 is located at base station controller (BSC) 50. Other embodiments, subsequently described, illustrate the gateway as being situated in other suitable locations.

As mentioned above, one protocol involved in the conversion performed by gateway 70 is the signaling protocol suitable for use in conjunction with a radio access network for setting up a circuit switch connection. As used herein, the signal protocol being used "in conjunction with" the radio access network encompasses the possibility that the signaling protocol can be used within the radio access network, and/or over an interface between the radio access network and another network, such as a core network, for example. In an example implementation, the signaling protocol suitable for use in conjunction with a radio access network for setting up a circuit switch connection can be GSM 24.008 signaling, for example. In other words, the signaling from gateway 70 to base station (BS) 52 is traditional MSC-to-BSC 3GPP 24.008 signaling (described, e.g.. by GSM 3GPP TS 24.008 V7.2.0 (2005-12-15), Mobile radio interface Layer 3 specification: Core network protocols: Stage 3 (Release 7), or its predecessor, TS 100 940 GSM 04.08 (v.7.8.0) Digital cellular telecommunications system (Phase 2+); Mobile radio Interface layer 3 specifications, both of which are incorporated by reference herein).

In the same example implementation, the signaling protocol for IP Multimedia Subsystem (IMS) 40 is Session Initiation Protocol (SIP). Thus, towards IP Multimedia Subsystem (IMS) 40, gateway 70 terminates the SIP protocol. Session Initiation Protocol (SIP) is described, e.g., in Rosenberg, J. et. A1 "SIP: Session Initiation Protocol", RFC3261, Internet Engineering Task Force. June 2002, which is incorporated herein by reference in its entirety.

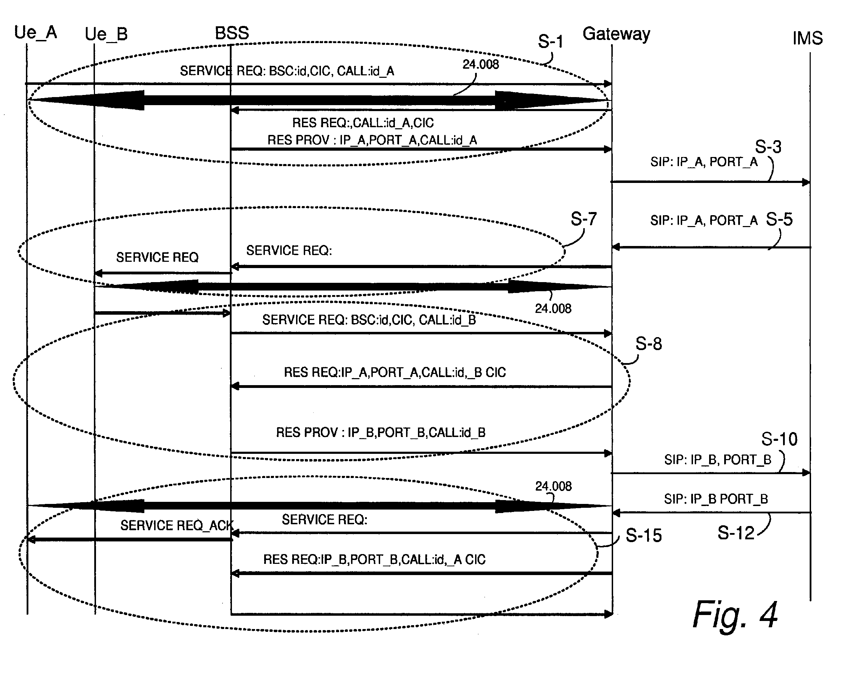

Thus, gateway 70 can he part of a telecommunications system which comprises an IP Multimedia Subsystem (IMS) 40 for performing call setup for a Voice over Internet Protocol (VoIP) connection between two mobile stations. e.g., mobile station 22₁ and mobile station 22₂. Fig. 1A, in conjunction with Fig. 4, illustrates basic, example steps, events, or actions involved in setting up a connection, i.e.. call setup, between mobile station 22₁ and mobile station 22₂. Both mobile station 22₁ and mobile station 22₂ can be legacy GSM circuit switched terminals without SIP capability. In Fig. 1A. mobile station 22₁ is the calling party, while mobile station 22₂ is the called party. In view of the numerous steps to be depicted. Fig. 1A shows various signaling paths as double-headed arrows, and employs double labeling for the steps shown. For example, for steps involving signal flow, a first label component of a label, e.g.. the component S-1 of label S-1/S-15. reflects a first direction of signal flow, while a second component S-15 of label S-1/S-15. reflects a second or reverse direction of signal flow.

Fig. 1A depicts as step S-1 the communication of call setup signaling from mobile station 22₁ to gateway 70. In one example implementation, the call setup signaling of step S-1 from base station controller (BSC) 50 to gateway 70 includes traditional MSC-to-BSC 3GPP GSM 24.008 signaling. As illustrated in Fig. 4, messages included in the traditional call setup signaling of step S-1 include a service request message, a reservation request message, and a reservation response message. One or more of the messages of step S-1 include parameters such as the identity of the BSC node involved in the connection, the CIC, and the calling party identifier (Call: id_A). The call setup signaling of step S-1 is directed to signaling converter 72 of gateway 70. A SIP client (or an instance of a SIP client) is established in gateway 70 for the call being setup, the SIP client including signaling converter 72.

As step S-2. signaling converter 72 converts the MSC-to-BSC 3GPP GSM 24.008 signaling to SIP protocol. Important parameters of the SIP protocol, obtained from GSM 24.008 signalling of step S-1, include the internet address corresponding to the calling party mobile station (IP_A) and the port of the gateway 70 to which the calling party mobile station is connected (PORT_A). The SIP-converted call setup signaling is then sent by gateway 70 to IP Multimedia Subsystem (IMS) 40, as reflected by step S-3, as shown in Fig. 1A and Fig. 4.

In the above regard, it will be appreciated that neither the calling party mobile station nor the called party mobile station, being circuit switched mobile station, have awareness of the Internet at all and thus do not really have their own internet addresses. Therefore, for each circuit switched mobile station involved in the connection, gateway 70 essentially simulates toward IP Multimedia Subsystem (IMS) 40 as if the mobile station had an internet address, and provides to IP Multimedia Subsystem (IMS) 40 an internet address which can be used to correspond to the mobile station.

In IP Multimedia Subsystem (IMS) 40, the SIP signaling protocol is handled by call service control function (CSCF) 42. as reflected by step S-4. In conjunction with setting up the connection for the call, call service control function (CSCF) 42 issues further call setup signaling which is destined for the called party's terminal. i.e.. to mobile station 22₂. Such further call setup signaling includes the internet address corresponding to the calling party mobile station (IP_A) and the port of the gateway 70 to which the calling party mobile station is connected (PORT_A). Fig. 1A depicts transmission of such further call setup signaling (in SIP protocol) from IP Multimedia Subsystem (IMS) 40 to gateway 70, e.g., to the SIP client of gateway 70, as step S-5.

Receipt of the further call setup signaling (in SIP protocol) from IP Multimedia Subsystem (IMS) 40 prompts signaling converter 72 of gateway 70 (as step S-6) to convert the SIP protocol signaling to MSC-to-BSC 3GPP GSM 24.008 signaling protocol. As shown by step S-7. the 24.008-converted further signaling is then sent toward base station controller (BSC) 50 so that the call setup information can be relayed to called party mobile station 22₂.

Further signaling involved in call setup includes return signaling from called party mobile station 22₂ for enabling calling party mobile station 22₂ to receive confirmation and necessary parameters for participating in the connection. Such return signaling includes the MSC-to-BSC 3GPP GSM 24.008 signaling of step S-8. which includes, e.g.. a service request response message, a reservation request message, and a reservation response message. One or more of the messages of step S-8 include parameters such as the identity of the BSC node involved in the connection, the CIC. and the called party identifier (Call: id_B). The call setup signaling of step S-8 is directed to signaling converter 72 of gateway 70. As step S-9. signaling converter 72 converts the MSC-to-BSC 3GPP GSM 24.008 signaling to SIP protocol. Parameters of the SIP protocol, obtained from GSM 24.008 signalling of step S-8, include the port of the gateway 70 to which the called party mobile station is connected (PORT_B) and the internet address corresponding to the called party mobile station (IP_B). The SIP-converted call setup signaling is then sent by gateway 70 to IP Multimedia Subsystem (IMS) 40. as reflected by step S-10, as shown in Fig. 1A and Fig. 4.

In IP Multimedia Subsystem (IMS) 40. the SIP signaling protocol is again handled by call service control function (CSCF) 42. as reflected by step S-11. Further in conjunction with setting up the connection for the call, call service control function (CSCF) 42 issues yet further call setup signaling which is destined for the calling party's terminal, i.e., to mobile station 22₂. Such further call setup signaling includes the internet address corresponding to the called party mobile station (IP_B) and the port of the gateway 70 to which the called party mobile station is connected (PORT_B). Fig. 1A depicts transmission of such further call setup signaling (in SIP protocol) from IP Multimedia Subsystem (IMS) 40 to gateway 70. e.g., to the SIP client of gateway 70, as step S-12.

Receipt of the further call setup signaling (in SIP protocol) from IP Multimedia Subsystem (IMS) 40 prompts signaling converter 72 of gateway 70 (as step S-13) to convert the SIP protocol signaling to MSC-to-BSC 3GPP GSM 24.008 signaling protocol. Moreover, as depicted by step S-14 of Fig. 1A, signaling converter 72 of gateway 70 provides traffic router 72 with the necessary information for locally routing user traffic between mobile station 22₁ and mobile station 22₂. For example, signaling converter 72 of gateway 70 provides traffic router 72 with the port information necessary for locally switching the user traffic between mobile station 22₁ and mobile station 22₂, e.g., PORT_A and PORT_B. Further, as shown by step S-15, the GSM 24.008-converted further signaling is then sent toward base station controller (BSC) 50 so that the call setup information can be relayed to calling party mobile station 22₁.

Thus, the SIP client of gateway 70 terminates the SIP protocol and sets up the call towards IP Multimedia Subsystem (IMS) 40. Towards base station controller (BSC) 50 and the legacy GSM circuit switched terminal 22₂, gateway 70 sets up the call using basic GSM 24.008 signaling.

Whereas Fig. 1A illustrates signaling involved in call setup for a connection involving the calling party of mobile station 22₁ and the called party of mobile station 22₂, Fig. 1B illustrates user traffic flow after the connection has been setup by the Fig. 1A type call setup signaling. In particular, Fig. 1B shows by arrow T the flow of user traffic between mobile station 22₁ and mobile station 22₂, e.g., the flow of user traffic flow from mobile station 22₁ to 22₂ and the flow of user traffic from mobile station 22₂ to 22₁. In this regard, Fig. 1B shows how user traffic between local mobile stations. e.g., mobile stations currently served by the same base station controller (BSC) 50, is routed in a manner that does not involve traffic routing to IP Multimedia Subsystem (IMS) 40. In particular, traffic router 74 of gateway 70 switches or turns around (back to the radio access network) BSC local calls already in the gateway 70 proximate the BSC 50. This switching is facilitated by the fact that traffic router 74 knows the respective ports through which to reach the calling party mobile station and the called party mobile station. This means that for BSC-local calls. IP Multimedia Subsystem (IMS) 40 is only involved in the call setup phase and for call control, but not for switching the call, thus reducing the load on IP Multimedia Subsystem (IMS) 40. In other words, once the call is established, gateway 70 does not forward the AMR speech frames through a media resource function (MRF) or the like of the IMS system MRF, but instead turns the packets around locally in the traffic router 74 of gateway 70, as illustrated in Fig. 1B.

Thus, IP Multimedia Subsystem (IMS) 40 is involved only for call setup, at least for cases of legacy GSM phones calling each other with an IMS core network. Once the call is setup, gateway 70 is used to switch the call user traffic locally, without going through IP Multimedia Subsystem (IMS) 40. In other words, the IP Multimedia Subsystem (IMS) is used to set up a call to a legacy (circuit switched) phone (e.g., mobile station), but the payload flow of voice data completely bypasses both the IP Multimedia Subsystem (IMS) and the regular core network (e.g., the non-IMS core network).

In many situations, the IP Multimedia Subsystem (IMS) 40 itself will serve to replace some conventional core network structure and functionality, such as the traditional Mobile Switching Center (MSC), for example. Although a Mobile Switching Center (MSC) can be replaced relatively quickly by a IP Multimedia Subsystem (IMS), e.g., in the near future replacement of Mobile Switching Centers by IP Multimedia Subsystem (IMS) will be increasingly common, it will be a much longer time before use of legacy phones (non-VoIP phones) will completely cease. The present technique technology has, as one of its advantages, an ability to sustain use of legacy phones and afford VoIP service to such phone, even though such legacy phones may not be SIP-capable, In other words, to the call service control function (CSCF) 42 of IP Multimedia Subsystem (IMS) 40 may not even know, and does not need to know, that it is the gateway 70 which is terminating the SIP protocol for the call, and that the SIP connection is not terminated by a SIP capable terminal.

The gateway 70 can be situated in any of several locations such as, for example, a base station controller (BSC) 50 as illustrated in Fig. 1. In the Fig. 1 embodiment, a Mobile Switching Center (MSC) 60 is unnecessary for handling calls/connections of the nature described herein, and therefore is unillustrated. Other suitable locations for gateway 70 are also possible, as hereinafter described.

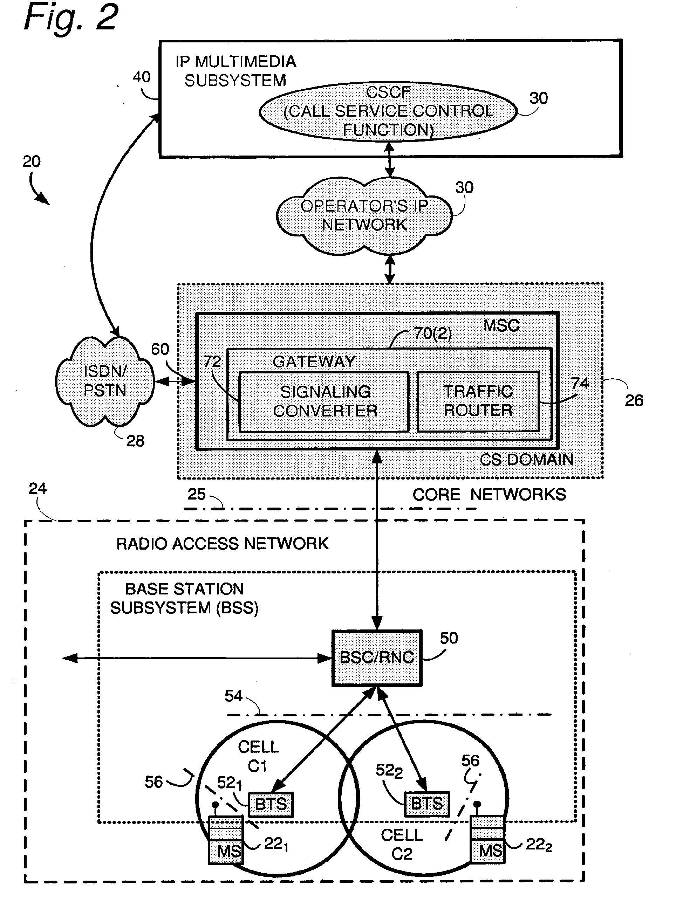

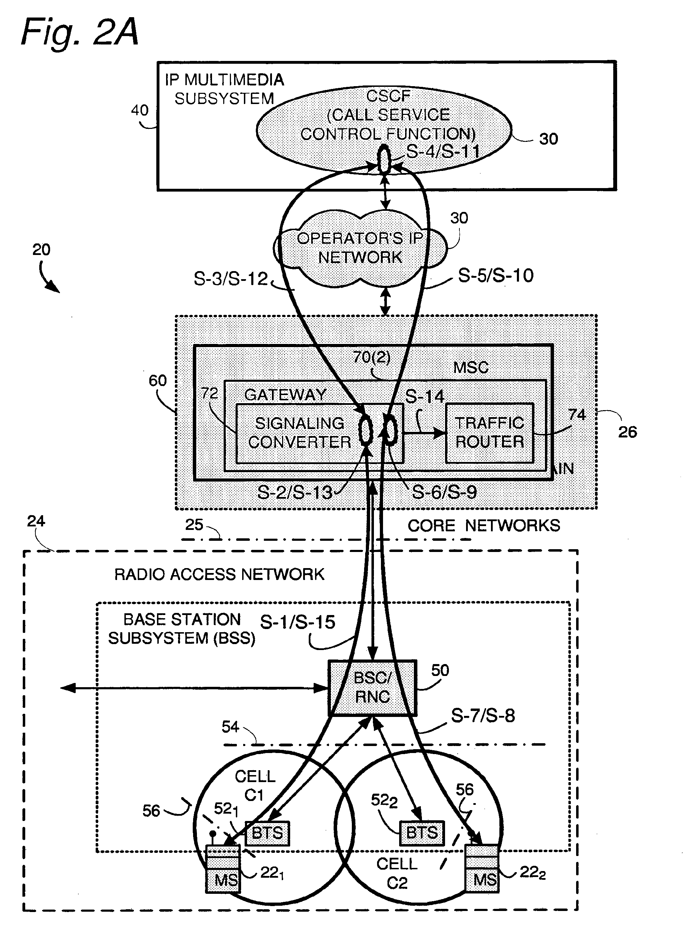

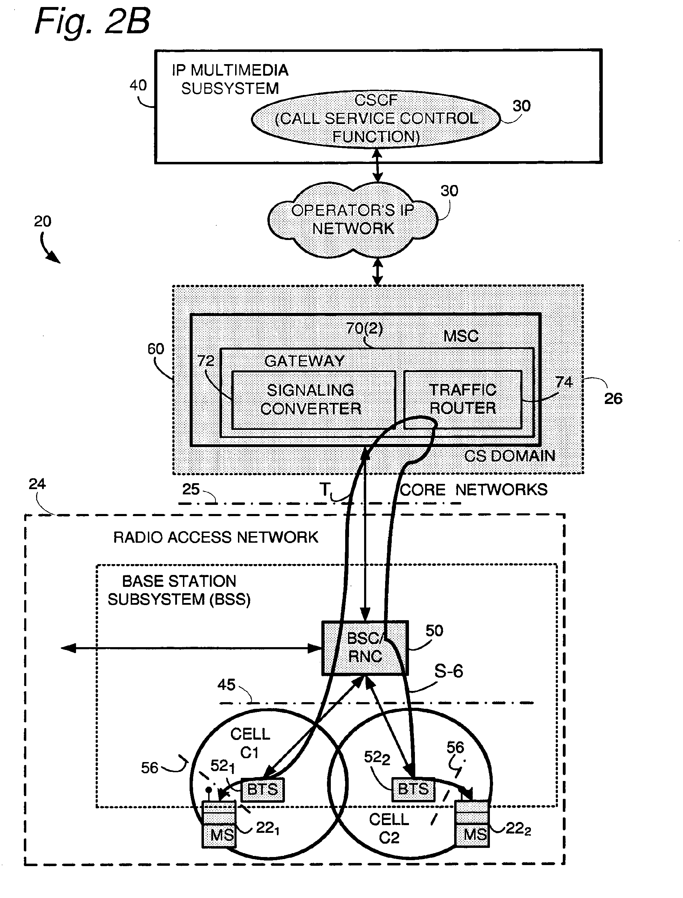

In many instances the IP Multimedia Subsystem (IMS) 40 can replace certain aspects or nodes of conventional circuit switched core networks, including replacing a Mobile Switching Center (MSC), as explained below in conjunction with the embodiment of Fig. 2. In Fig. 2, radio access network 24 is shown as connected over an interface to one or more core networks, core network domains, or core network nodes. In particular, in the example of Fig. 2. a generic radio access network 24 is connected over an interface 25 to a circuit switch core network domain 26. The core network domain 26 is further connected to other networks, such as the ISDN/PSTN network 28 and an operator's internet protocol (IP) network 30. Through operator's IP network 30 the core network domain 26 also has access to IP Multimedia Subsystem (IMS) 40.

Despite implementation of IP Multimedia Subsystem (IMS) 40, in the embodiment of Fig. 2 the core network domain 26 is shown as still comprising a Mobile Switching Center (MSC) 60, which may be a hold-over from a more conventional core network and augmented or supplemented in the manner described herein. In the embodiment of Fig. 2, the Mobile Switching Center (MSC) 60 is augmented to include gateway 70(2). In the Fig. 2 embodiment. Mobile Switching Center (MSC) 60 may, or may not, perform conventional operations, such as (for example) consultation of register or databases such as a home location register (HLR) and a visitor location register (VLR). The core network domain 26 is typically connected to (for example) the Public Switched Telephone Network (PSTN) and/or the Integrated Services Digital Network (ISDN), represented by cloud 28 in Fig. 2.

Fig. 2A illustrates call setup signaling between mobile station 22₁ and mobile station 22₂ for the Fig. 2 embodiment. Fig. 2B illustrates user traffic handling for the Fig. 2 embodiment. As in the Fig. 1 embodiment, call setup signaling is converted by gateway 70(2) for interworking between IP Multimedia Subsystem (IMS) 40 and the radio access network 24. After the connection is established by call setup signaling, gateway 70(2) switches user traffic (e.g., AMR frames) between mobile station 22₁ and mobile station 22₂ without routing through IP Multimedia Subsystem (IMS) 40.

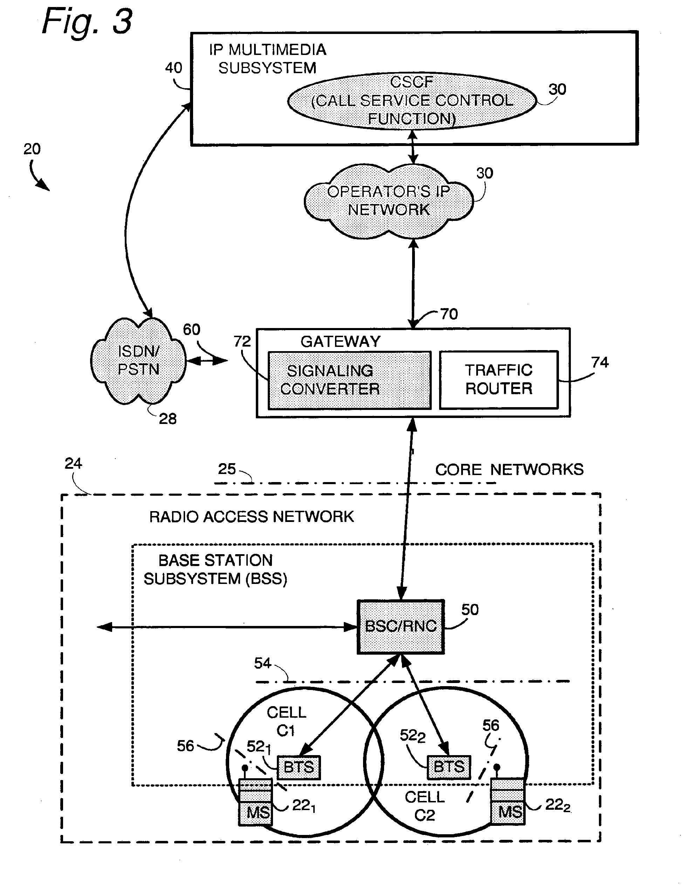

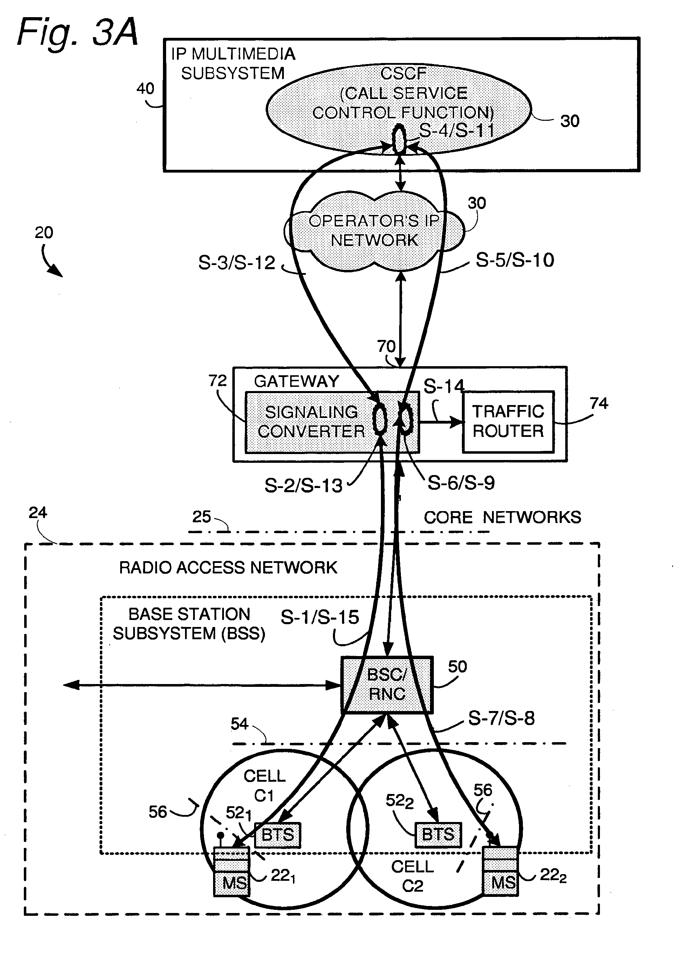

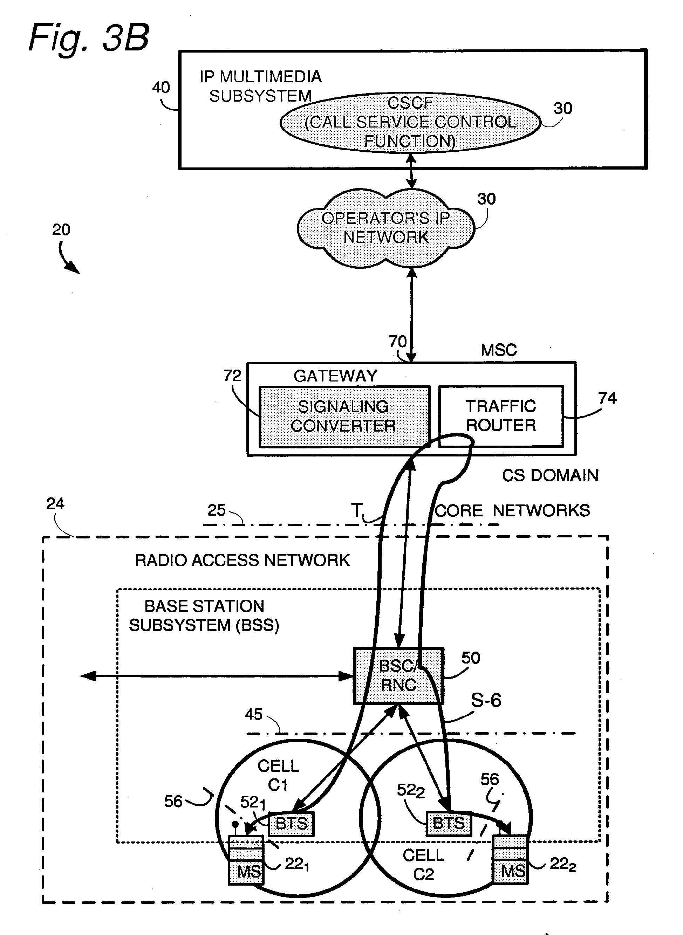

Fig. 3 illustrates yet another example embodiment wherein gateway 70(3) is situated a node distinct from a mobile switching center node (MSC) and a base station controller (BSC) node, e.g., at a dedicated gateway node. Fig. 3A illustrates call setup signaling between mobile station 22₁ and mobile station 22₂ for the Fig. 3 embodiment. Fig. 3B illustrates user traffic handling for the Fig. 3 embodiment. As in the Fig. 1 embodiment, call setup signaling is converted by gateway 70(3) for interworking between IP Multimedia Subsystem (IMS) 40 and the radio access network 24. After the connection is established by call setup signaling, gateway 70(3) switches user traffic (e.g., AMR frames) between mobile station 22₁ and mobile station 22₂ without routing through IP Multimedia Subsystem (IMS) 40.

Thus, gateway 70 can be situated in any of several locations such as, for example, at a mobile switching center (MSC) node, at a base station controller node of the radio access network (RAN), or at a node distinct from a mobile switching center node (MSC) and a base station controller (BSC) node, e.g., at a dedicated gateway node. Thus, gateway 70 can be a concept within base station controller (BSC) 50. a separate node, or a functionality within Mobile Switching Center (MSC) 60.

In any of the example embodiments illustrated herein or encompassed hereby, the gateway 70 can take various forms. For example, the functions of gateway 70 may be implemented using individual hardware circuits, using software functioning in conjunction with one or more suitably programmed digital microprocessors or general purpose computers (either centralized or distributed), using an application specific integrated circuit (ASIC), and/or using one or more digital signal processors (DSPs). Moreover, the functions of signaling converter 72 and traffic unit can be either co-located or even formed as a single unit, or distributed.

The gateways herein provide thus, e.g., by switching local traffic without invoking or interfering with IP Multimedia Subsystem (IMS) 40, reduce the load on nodes of IP Multimedia Subsystem (IMS) 40, and save transmissions.

Moreover, at least in some embodiments, an operator's old MCS nodes, which risk becoming obsolete as a consequence of replacement with IP Multimedia Subsystem (IMS) 40. can be converted to or supplemented with gateways such as gateway 70 described herein. The gateway 70 thus can be a conceptual converter which converts between 24.008 signalling (the regular A-interface signalling between MSC and BSC) on one side and SIP signalling (used for VoIP) on the other side.

Although various embodiments have been shown and described in detail, the claims are not limited to any particular embodiment or example. None of the above description should be read as implying that any particular element, step, range, or function is essential such that it must be included. It is to be understood that the invention is not to be limited to the disclosed embodiments, but on the contrary, is intended to cover various modifications and equivalent arrangements.

## Claims

1. Telecommunications network (20) apparatus arranged for:
(1) performing conversion of call setup signaling between (a) a signaling protocol suitable for use in conjunction with a radio access network for setting up a circuit switch connection between two terminals (221, 222) connected to a common base station controller, BSC, or radio network controller, RNC (50) and (b) a signaling protocol for a IP Multimedia Subsystem (IMS);
(2) routing the call setup signaling between the IP Multimedia Subsystem (IMS) (40) and a node of the radio access network (RAN), and, after completion of call setup for a connection; the telecommunications network apparatus being **characterized by** being further arranged for
(3) switching user traffic of the connection locally without routing the user traffic of the connection to the IP Multimedia Subsystem (IMS).

2. The apparatus of claim 1, wherein the signaling protocol suitable for use in conjunction with the radio access network includes GSM 24.008 signaling and the signaling protocol for a IP Multimedia Subsystem (IMS) is Session Initiation Protocol (SIP) signaling.

3. The apparatus of claim 1, wherein the apparatus is situated at a mobile switching center node (60).

4. The apparatus of claim 1, wherein the apparatus is situated at a base station controller node (50) or a radio network controller node (24) of the radio access network (RAN).

5. The apparatus of claim 1, wherein the apparatus is situated at a node distinct from a mobile switching center node (60) and a base station system.

6. A telecommunications system comprising:
IP Multimedia Subsystem (IMS) (40) for performing call setup for a Voice over Internet Protocol (VoIP) connection between two mobile stations;
the telecommunications system being **characterized by** further comprising a gateway (70, 70(2)) arranged for:
(1) performing conversion of call setup signaling between (a) a signaling protocol suitable for use in conjunction with a radio access network for setting up a circuit switch connection between two terminals (221, 222) connected to a common base station controller, BSC, or radio network controller, RNC (50) and (b) a signaling protocol for the IP Multimedia Subsystem (IMS);
(2) routing the call setup signaling between the IP Multimedia Subsystem (IMS) and a node of the radio access network (RAN), and, after completion of call setup for a connection between the two mobile stations;
(3) switching user traffic of the connection locally between the two mobile stations without routing the user traffic of the connection to the IP Multimedia Subsystem (IMS).

7. The apparatus of claim 6, wherein the gateway is situated at a mobile switching center node (60).

8. The apparatus of claim 6, wherein the gateway is situated at a base station controller node (50) or a radio network controller node (24) of the radio access network (RAN).

9. The apparatus of claim 6, wherein the gateway is situated at a node distinct from a mobile switching center node (60) and a base station system.

10. A method of operating a telecommunications network (20) comprising:
(1) performing conversion of call setup signaling between (a) a signaling protocol suitable for use in conjunction with a radio access network for setting up a circuit switch connection between two terminals (221, 222) connected to a common base station controller, BSC, or radio network controller, RNC (50) and (b) a signaling protocol for a IP Multimedia Subsystem (IMS) (40);
(2) routing the call setup signaling between the IP Multimedia Subsystem (IMS) and a node of the radio access network (RAN), and, after completion of call setup for a connection;
(3) switching user traffic of the connection locally without routing the user traffic of the connection to the IP Multimedia Subsystem (IMS).

11. The method of claim 10, wherein the signaling protocol suitable for use in conjunction with the radio access network includes GSM 24.008 signaling and the signaling protocol for a IP Multimedia Subsystem (IMS) is Session Initiation Protocol (SIP) signaling.

12. The method of claim 10, further comprising performing steps (1) - (3) at a mobile switching center node (60).

13. The method of claim 10, further comprising performing steps (1) - (3) at a base station controller node (50) or a radio network controller node (24) of the radio access network (RAN).

14. The method of claim 10, further comprising performing steps (1) - (3) at a node distinct from a mobile switching center node (60) and a base station system.

## Patentansprüche

1. Vorrichtung für ein Telekommunikationsnetz (20), angeordnet zum:
(1) Ausführen der Umwandlung von Anrufaufbausignalisierung zwischen (a) einem Signalisierungsprotokoll, das zur Verwendung in Verbindung mit einem Funkzugangsnetz zum Aufbauen einer leitungsvermittelten Verbindung zwischen zwei Endgeräten (221, 222) geeignet ist, die an eine gemeinsame Basisstationssteuerung, BSC, oder Funknetzsteuerung, RNC (50) angeschlossen sind, und (b) einem Signalisierungsprotokoll für ein IP Multimedia Subsystem (IMS);
(2) Routing der Anrufaufbausignalisierung zwischen dem IP Multimedia Subsystem (IMS) (40) und einem Knoten des Funkzugangsnetzes (RAN) und nach Abschluss von Anrufaufbau für eine Verbindung; wobei die Vorrichtung für ein Telekommunikationsnetz **dadurch gekennzeichnet ist, dass** sie außerdem angeordnet ist zum
(3) lokalen Schalten von Benutzerverkehr der Verbindung ohne Routing des Benutzerverkehrs der Verbindung an das IP Multimedia Subsystem (IMS).

2. Vorrichtung nach Anspruch 1, worin das zur Verwendung in Verbindung mit dem Funkzugangsnetz geeignete Signalisierungsprotokoll GSM-24.008-Signalisierung einschließt und das Signalisierungsprotokoll für ein IP Multimedia Subsystem (IMS) SIP(Sitzungsinitiierungsprotokoll)-Signalisierung ist.

3. Vorrichtung nach Anspruch 1, worin die Vorrichtung an einem MSC(Mobilfunkvermittlung)-Knoten (60) positioniert ist.

4. Vorrichtung nach Anspruch 1, worin die Vorrichtung an einem BSC(Basisstationssteuerung)-Knoten (50) oder einem RNC(Funknetzsteuerung)-Knoten (24) des Funkzugangsnetzes (RAN) positioniert ist.

5. Vorrichtung nach Anspruch 1, worin die Vorrichtung an einem Knoten positioniert ist, der von einem MSC(Mobilfunkvermittlung)-Knoten (60) und einem Basisstationssystem verschieden ist.

6. Telekommunikationssystem, Folgendes umfassend:
IP Multimedia Subsystem (IMS) (40) zum Ausführen von Anrufaufbau für eine VoIP(Sprache über Internetprotokoll)-Verbindung zwischen zwei Mobilstationen;
wobei das Telekommunikationssystem **dadurch gekennzeichnet ist, dass** es außerdem ein Gateway (70,70(2)) umfasst, angeordnet zum:
(1) Ausführen der Umwandlung von Anrufaufbausignalisierung zwischen (a) einem Signalisierungsprotokoll, das zur Verwendung in Verbindung mit einem Funkzugangsnetz zum Aufbauen einer leitungsvermittelten Verbindung zwischen zwei Endgeräten (221, 222) geeignet ist, die an eine gemeinsame Basisstationssteuerung, BSC, oder Funknetzsteuerung, RNC (50) angeschlossen sind, und (b) einem Signalisierungsprotokoll für das IP Multimedia Subsystem (IMS);
(2) Routing der Anrufaufbausignalisierung zwischen dem IP Multimedia Subsystem (IMS) (40) und einem Knoten des Funkzugangsnetzes (RAN) und nach Abschluss von Anrufaufbau für eine Verbindung zwischen den zwei Mobilstationen;
(3) lokales Schalten von Benutzerverkehr der Verbindung zwischen den zwei Mobilstationen ohne Routing des Benutzerverkehrs der Verbindung an das IP Multimedia Subsystem (IMS).

7. Vorrichtung nach Anspruch 6, worin das Gateway an einem MSC(Mobilfunkvermittlung)-Knoten (60) positioniert ist.

8. Vorrichtung nach Anspruch 6, worin das Gateway an einem BSC(Basisstationssteuerung)-Knoten (50) oder einem RNC(Funknetzsteuerung)-Knoten (24) des Funkzugangsnetzes (RAN) positioniert ist.

9. Vorrichtung nach Anspruch 6, worin das Gateway an einem Knoten positioniert ist, der von einem MSC(Mobilfunkvermittlung)-Knoten (60) und einem Basisstationssystem verschieden ist.

10. Verfahren für den Betrieb eines Telekommunikationsnetzes (20), Folgendes umfassend:
(1) Ausführen von Umwandlung von Anrufaufbausignalisierung zwischen (a) einem Signalisierungsprotokoll, das zur Verwendung in Verbindung mit einem Funkzugangsnetz zum Aufbauen einer leitungsvermittelten Verbindung zwischen zwei Endgeräten (221, 222) geeignet ist, die an eine gemeinsame Basisstationssteuerung, BSC, oder Funknetzsteuerung, RNC (50) angeschlossen sind, und (b) einem Signalisierungsprotokoll für ein IP Multimedia Subsystem (IMS) (40);
(2) Routing der Anrufaufbausignalisierung zwischen dem IP Multimedia Subsystem (IMS) und einem Knoten des Funkzugangsnetzes (RAN) und nach Abschluss von Anrufaufbau für eine Verbindung;
(3) lokales Schalten von Benutzerverkehr der Verbindung ohne Routing des Benutzerverkehrs der Verbindung an das IP Multimedia Subsystem (IMS).

11. Verfahren nach Anspruch 10, worin das zur Verwendung in Verbindung mit dem Funkzugangsnetz geeignete Signalisierungsprotokoll GSM-24.008-Signalisierung einschließt und das Signalisierungsprotokoll für ein IP Multimedia Subsystem (IMS) SIP(Sitzungsinitiierungsprotokoll)-Signalisierung ist.

12. Verfahren nach Anspruch 10, außerdem umfassend, dass die Schritte (1) - (3) an einem MSC(Mobilfunkvermittlung)-Knoten (60) ausgeführt werden.

13. Verfahren nach Anspruch 10, außerdem umfassend, dass die Schritte (1) - (3) an einem BSC(Basisstationssteuerung)-Knoten (50) oder einem RNC(Funknetzsteuerung)-Knoten (24) des Funkzugangsnetzes (RAN) ausgeführt werden.

14. Verfahren nach Anspruch 10, außerdem umfassend, dass die Schritte (1) - (3) an einem Knoten ausgeführt werden, der von einem MSC(Mobilfunkvermittlung)-Knoten (60) und einem Basisstationssystem verschieden ist.

## Revendications

1. Appareil de réseau de télécommunication (20) agencé de manière à :
(1) mettre en oeuvre une conversion de signalisation de configuration d'appels entre (a) un protocole de signalisation pertinent en vue d'une utilisation conjointe avec un réseau d'accès radio, en vue de configurer une connexion à commutation de circuits entre deux terminaux (221, 222) connectés à un contrôleur de station de base, BSC, commun ou à un contrôleur de réseau radio, RNC (50) commun, et (b) un protocole de signalisation pour un sous-système multimédia IP (IMS) ;
(2) acheminer la signalisation de configuration d'appels entre le sous-système multimédia IP (IMS) (40) et un noeud du réseau d'accès radio (RAN), et, suite à l'achèvement de la configuration d'appels pour une connexion ; l'appareil de réseau de télécommunication étant **caractérisé en ce qu'**il est en outre agencé de manière à :
(3) commuter un trafic utilisateur de la connexion localement, sans acheminer le trafic utilisateur de la connexion vers le sous-système multimédia IP (IMS).

2. Appareil selon la revendication 1, dans lequel le protocole de signalisation pertinent en vue d'une utilisation conjointe avec le réseau d'accès radio inclut une signalisation GSM 24.008, et le protocole de signalisation pour un sous-système multimédia IP (IMS) correspond à une signalisation de protocole d'ouverture de session (SIP).

3. Appareil selon la revendication 1, dans lequel l'appareil est situé au niveau d'un noeud de centre de commutation du service des mobiles (60).

4. Appareil selon la revendication 1, dans lequel l'appareil est situé au niveau d'un noeud de contrôleur de station de base (50) ou d'un noeud de contrôleur de réseau radio (24) du réseau d'accès radio (RAN).

5. Appareil selon la revendication 1, dans lequel l'appareil est situé au niveau d'un noeud distinct d'un noeud de centre de commutation du service des mobiles (60) et d'un système de station de base.

6. Système de télécommunication comprenant :
un sous-système multimédia IP (IMS) (40) destiné à mettre en oeuvre une configuration d'appels pour une connexion Voix sur protocole Internet (VoIP) entre deux stations mobiles ;
le système de télécommunication étant **caractérisé en ce qu'**il comprend en outre une passerelle (70, 70(2)) agencée de manière à :
(1) mettre en oeuvre une conversion de signalisation de configuration d'appels entre (a) un protocole de signalisation pertinent en vue d'une utilisation conjointe avec un réseau d'accès radio, en vue de configurer une connexion à commutation de circuits entre deux terminaux (221, 222) connectés à un contrôleur de station de base, BSC, commun, ou à un contrôleur de réseau radio, RNC (50) commun, et (b) un protocole de signalisation pour le sous-système multimédia IP (IMS) ;
(2) acheminer la signalisation de configuration d'appels entre le sous-système multimédia IP (IMS) et un noeud du réseau d'accès radio (RAN), et, suite à l'achèvement de la configuration d'appels pour une connexion entre les deux stations mobiles ;
(3) commuter un trafic utilisateur de la connexion localement entre les deux stations mobiles, sans acheminer le trafic utilisateur de la connexion vers le sous-système multimédia IP (IMS).

7. Appareil selon la revendication 6, dans lequel la passerelle est située au niveau d'un noeud de centre de commutation du service des mobiles (60).

8. Appareil selon la revendication 6, dans lequel la passerelle est située au niveau d'un noeud de contrôleur de station de base (50) ou d'un noeud de contrôleur de réseau radio (24) du réseau d'accès radio (RAN).

9. Appareil selon la revendication 6, dans lequel la passerelle est située au niveau d'un noeud distinct d'un noeud de centre de commutation du service des mobiles (60) et d'un système de station de base.

10. Procédé d'exploitation d'un réseau de télécommunication (20), comprenant les étapes ci-dessous consistant à :
(1) mettre en oeuvre une conversion de signalisation de configuration d'appels entre (a) un protocole de signalisation pertinent en vue d'une utilisation conjointe avec un réseau d'accès radio, en vue de configurer une connexion à commutation de circuits entre deux terminaux (221, 222) connectés à un contrôleur de station de base, BSC, commun ou à un contrôleur de réseau radio, RNC (50) commun, et (b) un protocole de signalisation pour un sous-système multimédia IP (IMS) (40) ;
(2) acheminer la signalisation de configuration d'appels entre le sous-système multimédia IP (IMS) et un noeud du réseau d'accès radio (RAN), et, suite à l'achèvement de la configuration d'appels pour une connexion ;
(3) commuter un trafic utilisateur de la connexion localement, sans acheminer le trafic utilisateur de la connexion vers le sous-système multimédia IP (IMS).

11. Procédé selon la revendication 10, dans lequel le protocole de signalisation pertinent en vue d'une utilisation conjointe avec le réseau d'accès radio inclut une signalisation GSM 24.008 et le protocole de signalisation pour un sous-système multimédia IP (IMS) correspond à une signalisation de protocole d'ouverture de session (SIP).

12. Procédé selon la revendication 10, comprenant en outre la mise en oeuvre des étapes (1) à (3) au niveau d'un noeud de centre de commutation du service des mobiles (60).

13. Procédé selon la revendication 10, comprenant en outre la mise en oeuvre des étapes (1) à (3) au niveau d'un noeud de contrôleur de station de base (50) ou d'un noeud de contrôleur de réseau radio (24) du réseau d'accès radio (RAN).

14. Procédé selon la revendication 10, comprenant en outre la mise en oeuvre des étapes (1) à (3) au niveau d'un noeud distinct d'un noeud de centre de commutation du service des mobiles (60) et d'un système de station de base.
